# EUROPÄISCHE PATENTSCHRIFT

(11) **EP 1 203 681 B1**
(45) Veröffentlichungstag und Bekanntmachung des Hinweises auf die Patenterteilung: **28.12.2005**
(21) Anmeldenummer: 01124719.4
(22) Anmeldetag: 10.10.2001
(51) Int. Cl.: B60J 7/22, B60H 1/24, B60N 2/56

(54) **Windschutzeinrichtung für einen offenen Kraftwagen**
Wind-protection device for open vehicle
Dispositif de paravent pour véhicule ouvert

(30) Priorität: 01.11.2000 DE 10054009
(43) Veröffentlichungstag der Anmeldung: 08.05.2002
(73) Patentinhaber: DaimlerChrysler AG, 70567 Stuttgart (DE)
(72) Erfinder: Bargheer, Claudio, 70435 Stuttgart (DE); Nordberg, Peter, 8010 Graz (AT); Orizaris, Vasilios, 71272 Renningen (DE); Pfahler, Karl, Dr., 70180 Stuttgart (DE); Renner, Lothar, 71154 Nufringen (DE)

(56) Entgegenhaltungen:
- EP-A- 0 730 720
- DE-A- 19 910 390
- DE-U- 9 201 474
- US-A- 4 685 727
- US-A- 5 934 748

## Beschreibung

Die Erfindung betrifft einen Fahrzeugsitz für einen offenen Kraftwagen nach dem Oberbegriff des Patentanspruchs 1.

Bei einem aus der DE 199 10 390 A bekannten Fahrzeugsitz ist gemäß dem Oberbegriff des Anspruchs 1 eine zur Sitzbelüftung ausgebildete Luftversorgungseinrichtung vorgesehenen, welche auf Höhe des oberen Bereichs der Rückenlehne eine Mehrzahl von Luftausströmöffnungen für den Kopf-, Schulter und Nackenbereich des Sitzinsassen umfasst. Die Regelung des aus der Luftausströmöffnung austretenden Luftstroms kann dabei über eine Regelungseinheit in Abhängigkeit des Parameterwertes beispielsweise abhängig von der Außentemperatur, der Sonneneinstrahlung oder der Kühlwassertemperatur erfolgen.

Aus der DE 92 01 474 U1 sind zwei in einer Reihe angeordnete Fahrzeugsitze als bekannt zu entnehmen, wobei im Abstand hinter den Sitzen auf Höhe des oberen Bereichs der Rückenlehne ein in Fahrzeugquerrichtung verlaufendes Rohr mit Luftausströmöffnungen vorgesehen ist, über welches der Kopf-, Schulter und Nackenbereich des Sitzinsassen zur Verminderung von unerwünschten Zuglufterscheinungen mit einem regelbaren Luftstrom beaufschlagbar ist.

Aufgabe der Erfindung ist die Schaffung eines Fahrzeugsitzes der eingangs genannten Art mit verbessertem Komfort für den Sitzinsassen beim offenen Fahren.

Diese Aufgabe wird erfindungsgemäß durch einen Fahrzeugsitz mit den Merkmalen des Patentanspruchs 1 gelöst. Vorteilhafte Ausgestaltungen der Erfindung sind in den Unteransprüchen angegeben.

Erfindungsgemäß erfolgt die Regelung des aus der Luftausströmöffnung austretenden Luftstroms in Abhängigkeit der Fahrgeschwindigkeit des Kraftwagens. Dabei trägt die erfindungsgemäße Luftversorgungseinrichtung zur Steigerung des Komforts für die Insassen der Tatsache Rechnung, dass bei höherer Fahrgeschwindigkeit die Turbulenzen im Kopf- und Nackenbereich des Fahrgastes stärker werden. Demgemäß wird bei zunehmender Fahrgeschwindigkeit der Kopf- und Nackenbereich des Fahrgastes mit einem durch die Regelungseinheit gesteuerten vorzugsweise stärkeren Luftstrom zur Kompensation dieser Verwirbelungen versorgt.

Gleichfalls eignet sich die erfindungsgemäße Luftversorgungseinrichtung zum Ausgleich von Schwankungen der Außentemperatur, wobei dem Sitzinsassen durch die angepasste Regelung des Luftstromes ein gleichbleibend angenehmes Gefühl im Kopf- und Nackenbereich verschafft werden kann. Insbesondere können die Sensoren auch zum Erfassen der Luftfeuchtigkeit eingesetzt werden.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig. 1: eine schematische Seitenansicht auf einen offenen Kraftwagen, in dessen Fahrgastzelle eine in Fig.2 näher gezeigte und dem jeweiligen Fahrzeugsitz zugeordnete Windschutzeinrichtung gemäß der Erfindung vorgesehen ist; und in
- Fig. 2: in schematischer Perspektivansicht die dem Fahrzeugsitz zugeordnete erfindungsgemäße Windschutzeinrichtung mit in die Rückenlehne integrierter Luftversorgungseinrichtung, mit welcher der Luftstrom zur Verminderung unerwünschter Zuglufterscheinungen für den Sitzinsassen erzeugt wird.

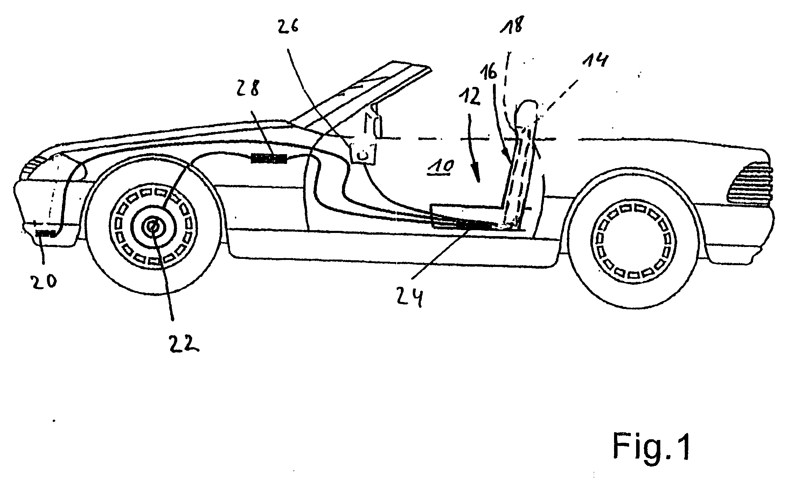

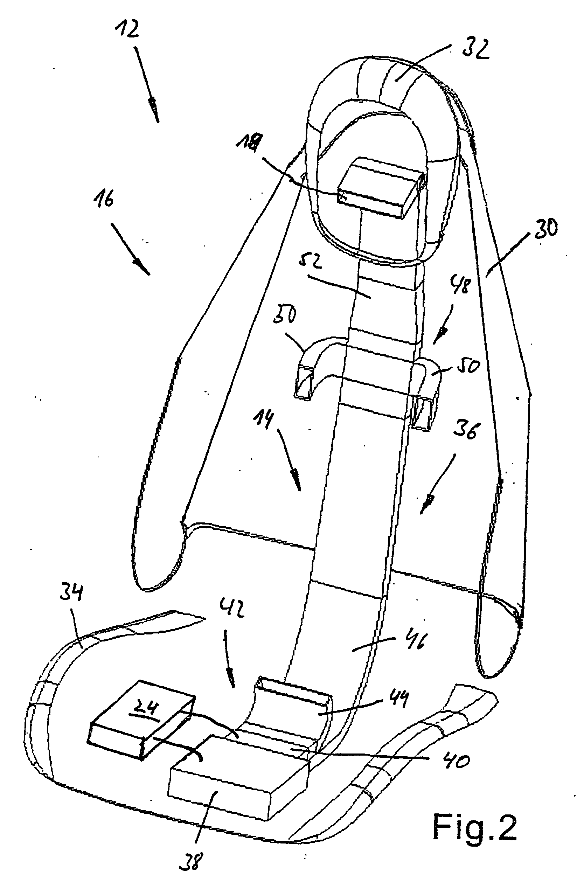

In Fig.1 ist in schematischer Seitenansicht ein offener Kraftwagen dargestellt, in dessen Fahrgastzelle 10 eine Sitzreihe mit zwei Fahrzeugsitzen 12 angeordnet ist. In die beiden Fahrzeugsitze 12 ist jeweils eine in Fig.1 lediglich schematisch angedeutete und im weiteren unter Bezugnahme auf Fig.2 noch näher erläuterte Luftversorgungseinrichtung 14 integriert, wobei auf Höhe des oberen Bereichs der Rückenlehne 16 des Sitzes 12 eine Luftausströmöffnung 18 der Luftversorgungseinrichtung 14 erkennbar ist. Über diese Luftausströmöffnung 18 ist der Kopf-, Schulter und Nackenbereich des Sitzinsassen auf im weiteren noch erläuterte Weise zur Verminderung von unerwünschten Zuglufterscheinungen mit einem regelbaren Luftstrom versorgbar.

Die Luftversorgungseinrichtung 14 ist hier sowohl mit einem Sensor 20 zum Erfassen der Außentemperatur wie auch mit einem Sensor 22 zum Erfassen der Fahrgeschwindigkeit verbunden. Die beiden Sensoren 20,22 sind mit einer innerhalb des jeweiligen Sitzes 12 angeordneten Regeleinheit 24 verbunden, über welche die Regelung des aus der Luftausströmöffnung 18 austretenden Luftstroms in Abhängigkeit der besagten Parameterwerte -der Außentemperatur und/oder der Fahrgeschwindigkeit - erfolgt. Zudem ist im Innenraum des Kraftwagens eine weitere Regelungseinheit 26 vorgesehen, über welche der Luftstrom durch den Sitzinsassen einstellbar ist. Das Erfassen der Fahrgeschwindigkeit erfolgt in dem hier gezeigten Ausführungsbeispiel durch ein ohnehin vorhandenes ABS-Steuergerät 28, welches die momentane Fahrgeschwindigkeit in ein elektronisches Signal umwandelt und an die Regelungseinheit 26 übermittelt. Das Erfassen der Außentemperatur kann durch einen ohnehin vorhandenen Temperatursensor 20 zum Anzeigen der Temperatur im Cockpit erfolgen, wobei die Temperatur in ein elektronisches Signal umgewandelt und an die Regelungseinheit 26 im Sitz 12 übermittelt wird.

In Fig.2 ist in schematischer Perspektivansicht einer der beiden Fahrzeugsitze 12 gemäß Fig.1 mit der Luftversorgungseinrichtung zur Verminderung unerwünschter Zuglufterscheinungen für den Sitzinsassen dargestellt. Von der Rückenlehne 16 des Sitzes 12 sind hier ein Lehnenrahmen 30 und eine höhenverstellbare Kopfstütze 32 erkennbar. Vom Sitzkissenteil des Sitzes 12 ist lediglich ein unterer Rahmen 34 dargestellt. In die Rückenlehne 16 und das Sitzkissenteil 34 ist die Luftversorgungseinrichtung 14 integriert, welche eine Kanalanordnung 36 umfaßt. Der Kanalanordnung 36 ist hier ein von einem Gehäuse aufgenommenes Gebläse 38 vorgeschaltet, dessen Luftansaugung an der Unterseite des Sitzkissenteils 34 erfolgt. Druckseitig des Gebläses 38 gelangt der Luftstrom zu einem zuschaltbaren Heizelement 40, mit dem dieser temperiert werden kann. Dem Heizelement 40 ist eine Verteileinrichtung 42 nachgeschaltet, mit welcher der Luftstrom - je nach Einstellung - an einen unteren Teilkanal 44 und/oder einen oberen Teilkanal 46 verteilt werden kann. Der untere Teilkanal 44 dient zur Versorgung von nicht gezeigten Luftausströmöffnungen im Sitzbezug des Sitzkissenteils 34, welche der Sitzheizung oder der Sitzbelüftung vorgesehen sind. Etwa auf halber Höhe der Rückenlehne 16 ist eine weitere Verteileinrichtung 48 angeordnet, mit der durch den Teilkanal 46 strömende Luft an zwei Teilkanäle 50 zur Versorgung von Luftausströmöffnungen im nicht gezeigten Sitzbezug der Rückenlehne 16 abgezweigt, oder über einen Versorgungskanal 52 zur Luftversorgung eines Luftausströmers 54 in der Kopfstütze 32 verteilt werden kann. Die nicht gezeigten Luftausströmöffnungen im Sitzbezug der Rückenlehne 16 dienen der Sitzheizung oder der Sitzbelüftung derselben. Der Luftausströmer 54 mit der in Fig.1 beschriebenen Luftausströmöffnung 18 in der Kopfstütze 32 dient zur Verminderung von Zuglufterscheinungen im Kopf-, Schulter und Nackenbereich des Sitzinsassen, welche beim Fahren mit offenem Verdeck entstehen. Der Luftausströmer 54 endet etwa flächenbündig integriert in die Kopfstütze 32 an deren Vorderseite. Der Luftausströmer 42 ist dabei mit seinem vorderen oberen Ende an der Kopfstütze 32 befestigt und mit dieser bewegungsgekoppelt, so dass sich nach dem Anpassen der Kopfstütze 32 auch die Luftausströmöffnung 18 optimal in Bezug auf den Kopf des Insassen befindet und der aus der austretende Luftstrom optimal auf den Kopf- und Nackenbereich des Fahrgastes gerichtet ist.

Es ist ersichtlich, dass das Gebläse 38 und das Heizelement 40 zum Erzeugen des temperierten, aus der Luftausströmöffnung 18 austretenden Luftstroms über die Regelungseinheit 24 regelbar sind. Abhängig von den Signalen der beiden Sensoren 20 und 22 wird das Gebläse 38 und/oder das Heizelement 40 der Fahrgeschwindigkeit bzw. der Außentemperatur entsprechend gesteuert. Da beispielsweise bei steigender Fahrgeschwindigkeit die Turbulenzen im Kopf- und Nackenbereich des Fahrgastes stärker werden, fördert das Gebläse 38 bei zunehmender Fahrgeschwindigkeit mehr Luft zu der Luftausströmöffnung 18, wobei entsprechend der mehr geförderten Luft auch die Heizleistung des Heizelements 40 durch die Regelungseinheit 24 erhöht wird. Ebenfalls wird die Heizleistung des Heizelements 40 bei sinkender Außentemperatur durch die Regelungseinheit 24 erhöht. Darüber hinaus ist es für den Sitzinsassen möglich, über die weitere Regelungseinheit 26 eine entsprechende Temperatur und Intensität der aus der Luftausströmöffnung 18 austretenden Luftstroms einzustellen.

Die hier beschriebene Luftversorgungseinrichtung 14 dient sowohl zur Versorgung der dem Insassen zugewandten Sitzoberfläche wie auch der Luftausströmöffnung 18 mit Luft. Gleichfalls wäre eine Luftversorgungseinrichtung 14 denkbar, die lediglich zur Versorgung der Luftausströmöffnung 18 vorgesehen ist.

Die hier in den Fahrzeugsitz 12 integrierte Luftversorgungseinrichtung 14 kann auch außerhalb des Sitzes, beispielsweise an der Rückseite der Rückenlehne 16 angeordnet sein. Gleichfalls kann auch eine Luftversorgungseinrichtung 14 verwendet werden, die karosserieseitig beispielsweise in der Hecktrennwand angeordnet ist.

## Patentansprüche

1. Fahrzeugsitz für einen offenen Kraftwagen, mit einer Luftversorgungseinrichtung (14), welche auf Höhe des oberen Bereichs der Rückenlehne (16) des Fahrzeugsitzes (12) wenigstens eine Luftausströmöffnung (18) umfasst, über welche der Kopf-, Schulter und Nackenbereich des Sitzinsassen mit einem regelbaren Luftstrom beaufschlagbar ist, wobei die Luftversorgungseinrichtung (14) mit wenigstens einem Sensor (20,22) zum Erfassen eines Parameterwertes verbindbar ist, und wobei die Regelung des aus der Luftausströmöffnung (18) austretenden Luftstroms über eine Regelungseinheit (24) in Abhängigkeit des Parameterwertes erfolgt,
**dadurch gekennzeichnet,**
**dass** die Regelung des Luftstroms zur Verminderung von unerwünschten Zuglufterscheinungen im Kopf-, Schulter und Nackenbereich des Sitzinsassen in Abhängigkeit der Fahrgeschwindigkeit des Kraftwagens erfolgt.

2. Fahrzeugsitz nach Anspruch 1,
**dadurch gekennzeichnet,**
**dass** die Regelungseinheit (24) der Luftversorgungseinrichtung (14) zum Erfassen der Fahrgeschwindigkeit mit einem ohnehin vorhandenen ABS-Steuergerät (28) des Kraftwagens verbindbar ist.

3. Fahrzeugsitz nach Anspruch 1,
**dadurch gekennzeichnet,**
**dass** die Regelung des Luftstroms zusätzlich in Abhängigkeit der Außentemperatur erfolgt.

4. Fahrzeugsitz nach Anspruch 3,
**dadurch gekennzeichnet,**
**dass** die Regelungseinheit (24) der Luftversorgungseinrichtung (14) zum Erfassen der Außentemperatur mit einem ohnehin vorhandenen Temperatursensor (20) des Kraftwagens verbindbar ist.

5. Fahrzeugsitz nach Anspruch 1,
**dadurch gekennzeichnet,**
**dass** die Luftversorgungseinrichtung (14) in den Fahrzeugsitz (12) integriert und unmittelbar von diesem getragen ist.

6. Fahrzeugsitz nach Anspruch 5,
**dadurch gekennzeichnet,**
**dass** im Fahrzeugsitz (12) ein Gebläse (38) und ein Heizelement (40) zum Erzeugen des temperierten Luftstroms sowie die Regelungseinheit (24) vorgesehen sind, mit welcher das Gebläse (38) und das Heizelement (40) regelbar sind.

7. Fahrzeugsitz nach Anspruch 1,
**dadurch gekennzeichnet,**
**dass** der Luftstrom über eine weitere Regelungseinheit (26) durch den Sitzinsassen einstellbar ist.

## Claims

1. Vehicle seat for an open-top motor vehicle, with an air supply system (14) incorporating at least one air outlet orifice (18) on a level with the upper region of the back rest (16) of the vehicle seat (12), by means of which a controllable air flow can be supplied to the head, shoulder and neck region of the seat occupant, which air supply system (14) can be connected to at least one sensor (20, 22) for detecting a parameter value, the air flow leaving the air outlet orifice (18) being controlled by means of a control unit (24) as a function of the parameter value,
**characterised in that**
the air flow is controlled as a function of the driving speed of the motor vehicle in order to reduce undesirable draughts occurring in the head, shoulder and neck region of the seat occupant.

2. Vehicle seat as claimed in claim 1,
**characterised in that**
the control unit (24) of the air supply system (14) can be connected to an ABS control device (28) provided on the vehicle as a matter of course, in order to detect the driving speed.

3. Vehicle seat as claimed in claim 1,
**characterised in that**
the air flow is additionally controlled as a function of the outside temperature.

4. Vehicle seat as claimed in claim 3,
**characterised in that**
the control unit (24) of the air supply system (14) may be connected to a temperature sensor (20) provided on the vehicle as a matter of course in order to detect the outside temperature.

5. Vehicle seat as claimed in claim 1,
**characterised in that**
the air supply system (14) is integrated in the vehicle seat (12) and is directly supported by it.

6. Vehicle seat as claimed in claim 5,
**characterised in that**
a fan (38) and a heating element (40) for generating a heated air flow are provided in the vehicle seat (12), as is the control unit (24) by means of which the fan (38) and the heating element (40) can be controlled.

7. Vehicle seat as claimed in claim 1,
**characterised in that**
the air flow can be adjusted by the seat occupant by means of another control unit (26).

## Revendications

1. Siège de véhicule pour un véhicule ouvert, avec un dispositif d'alimentation en air (14) qui comprend à la hauteur de la zone supérieure du dossier (16) du siège du véhicule (12) au moins une ouverture de sortie d'air (18), par laquelle les zones de la tête, de l'épaule et du cou du passager assis peuvent être alimentées avec un flux d'air réglable, le dispositif d'alimentation en air (14) pouvant être relié à au moins un capteur (20, 22) pour l'enregistrement d'une valeur de paramètre, et le réglage du flux d'air sortant de l'ouverture de sortie d'air (18) s'effectuant au moyen d'une unité de réglage (24) en fonction de la valeur du paramètre, **caractérisé en ce que** le réglage du flux d'air s'effectue en fonction de la vitesse de roulement de la voiture afin de réduire les phénomènes inopportuns de courant d'air dans la zone de la tête, de l'épaule ou de la nuque du passager assis.

2. Siège de véhicule selon la revendication 1, **caractérisé en ce que** l'unité de réglage (24) de l'unité d'alimentation en air (14) peut être reliée pour l'enregistrement de la vitesse du véhicule à un appareil de commande d'ABS (28) présent dans tous les cas de la voiture.

3. Siège de véhicule selon la revendication 1, **caractérisé en ce que** le réglage du flux d'air s'effectue en supplément en fonction de la température extérieure.

4. Siège de véhicule selon la revendication 3, **caractérisé en ce que** l'unité de réglage (24) du dispositif d'alimentation en air (14) peut être reliée pour l'enregistrement de la température extérieure à un capteur de température (20) présent dans tous les cas de la voiture.

5. Siège de véhicule selon la revendication 1, **caractérisé en ce que** le dispositif d'alimentation en air (14) est intégré dans le siège du véhicule (12) et supporté directement par celui-ci.

6. Siège de véhicule selon la revendication 5, **caractérisé en ce qu'**il est prévu dans le siège du véhicule (12) une soufflerie (38) et un élément de chauffage (40) pour générer le flux d'air tempéré et l'unité de réglage (24), avec laquelle la soufflerie (38) et l'élément de chauffage (40) peuvent être réglés.

7. Siège de véhicule selon la revendication 1, **caractérisé en ce que** le flux d'air peut être réglé par le passager assis au moyen d'une autre unité de réglage (26).
